# EUROPEAN PATENT APPLICATION

(11) **EP 1 821 554 A1**
(43) Date of publication of application: **22.08.2007**
(21) Application number: 06252381.6
(22) Date of filing: 04.05.2006
(51) Int. Cl.: H04Q 7/22, H04L 12/18

(54) **Content delivery system**

(30) Priority: 20.02.2006 JP 2006043117
(71) Applicant: FUJITSU LIMITED, Kawasaki-shi, Kanagawa 211-8588 (JP)
(72) Inventor: Kimura, Bun, Fujitsu Limited, Kawasaki-shi Kanagawa 211-8588 (JP); Ikeda, Eiji, Fujitsu Limited, Kawasaki-shi Kanagawa 211-8588 (JP)
(74) Representative: Stebbing, Timothy Charles

(57) **Abstract**

In a radio network controller (103) for delivering the same content to plural receiving terminal devices (105), a content delivery unit (231) delivers the content in the P-t-M [point-to-multipoint] mode to the receiving terminal devices (105). A reception-content-information managing unit (235) receives information indicative of an amount of content that has been received by each of the receiving terminal devices (105) in a P-t-P [point-to-point] mode from each of the receiving terminal devices.

## Description

This application is based upon and claims the benefit of priority from the prior Japanese Patent Application No. 2006-043117, filed on February 20, 2006.

The present invention relates to a technology for communicating data on a network in which the same data is delivered to a plurality of terminal devices at the same time.

In recent years, a multimedia broadcast/multicast service (MBMS) is implemented in content delivery on a network. In the MBMS, the same content is provided at the same time, to a plurality of receiving terminal devices installed in a specific area. In the MBMS, the content is provided in various forms including a streaming delivery of audio and video, a file down load, and a carousel service (ticker) in which data is repeatedly sent to a user while updating data as necessary, like an electrical moving sign in which characters are displayed while flowing.

Two modes are used in the MBMS, which are a broadcast mode and a multicast mode. In the broadcast mode, the same content is simultaneously delivered to all of the receiving terminal devices in a specific area. On the other hand, in the multicast mode, the same content is simultaneously delivered to a plurality of receiving terminal devices that have contracted in advance to receive the content. Whether to receive the content is determined at a receiving terminal device side. Such a communication mode is called a point to multipoint (P-t-M) mode. In the content delivery in the P-t-M mode, whether to receive the content to be delivered is arbitrarily determined at the receiving terminal device side.

In the multicast mode, for the purpose of saving communication resource, the content can be delivered by switching communication modes between the P-t-M mode and a point to point (P-t-P) mode depending on the number of receiving terminal devices that receive the content (for example, Japanese Patent Laid-Open Publication No. 2005-252506). The P-t-P mode is a communication mode in which communication of the content is individually performed with each of the receiving terminal devices.

In a content delivery in the P-t-M mode, however, there is a problem that a content provider cannot acquire information on what content and how much content each of the receiving terminal devices has received. In the content delivery in a P-t-P mode, since the content is individually delivered to each of the receiving terminal devices, the content provider can acquire information on what content and how much content each of the receiving terminal devices has received. However, in the P-t-M mode, since the content is delivered all at once to a specific overall community (broadcast mode) or all of the receiving terminal devices (multicast mode) under contract, the content provider cannot acquire information on what content and how much content each of the receiving terminal devices has received.

For this reason, in the P-t-M mode, the content provider cannot account for, and if necessary make a charge on the basis of, the amount of content received by the receiving terminal device. If the content provider makes a charge on the basis of time while the receiving terminal device is connected to a network, there may be a disadvantage for a user if the content is not completely received due to a communication condition.

A network controller according to one aspect of the present invention is for delivering data to a plurality of terminal devices at the same time. The network controller includes a delivery unit configured to deliver the data in a point to multipoint mode to the terminal devices; and a receiving unit configured to receive reception information indicating an amount of data that has been received by the terminal device. The reception information is transmitted from the terminal device in a point to point mode.

A terminal device according to another aspect of the present invention includes a receiving unit configured to receive data delivered from a network controller in a point to multipoint mode; and a transmitting unit configured to transmit information indicating an amount of data that has been received by the receiving unit, to the network controller in a point to point mode.

A data delivery system according to still another aspect of the present invention is for delivering data to a plurality of terminal devices at the same time. The data delivery system includes a network controller configured to deliver the data to the terminal devices in a point to multipoint mode, and to receive, from the terminal devices in a point to point mode, information indicating an amount of data that has been received by each of the receiving terminal devices; and a receiving unit configured to receive the data in the point to multipoint mode, and to transmit, to the network controller in the point to point mode, the information indicating the amount of data received.

A network control method according to still another aspect of the present invention is of delivering data to a plurality of terminal devices at the same time. The network control method includes delivering data to the terminal devices in a point to multipoint mode; and receiving, from the terminal devices in a point to point mode, information indicating an amount of data that has been received by each of the receiving terminal devices.

A data receiving method according to still another aspect of the present invention includes steps of receiving data delivered from a network controller in a point to multipoint mode; and transmitting information indicating an amount of data that has been received in the receiving step, to the network controller in a point to point mode.

The other features and advantages of the present invention are specifically set forth in or will become apparent from the following detailed description of the invention when read in conjunction with the accompanying drawings, in which:
Fig. 1 is a block diagram of a content delivery system according to a first embodiment of the present invention;
Fig. 2 is a block diagram of the content delivery system according to the first embodiment;
Fig. 3 is a sequence diagram of an operation by the content delivery system according to the first embodiment;
Fig. 4 is a flowchart of an operation by a radio network controller in the content delivery system according to the first embodiment;
Fig. 5 is a flowchart of an operation by a receiving terminal device in the content delivery system according to the first embodiment;
Fig. 6 is a sequence diagram of an operation by the content delivery system according to the first embodiment when a link-down is detected;
Fig. 7 is a block diagram of a content delivery system according to a second embodiment of the present invention;
Fig. 8 is a sequence diagram of a communication mode switching operation by the content delivery system according to the second embodiment; and
Fig. 9 is a flowchart of an operation by a radio network controller in the content delivery system according to the second embodiment.

Exemplary embodiments according to the present invention will be explained in detail with reference to the accompanying drawings. While content delivery via radio communication is described as an example in the embodiments, content delivery via cable communication is also suitable for application of the present invention.

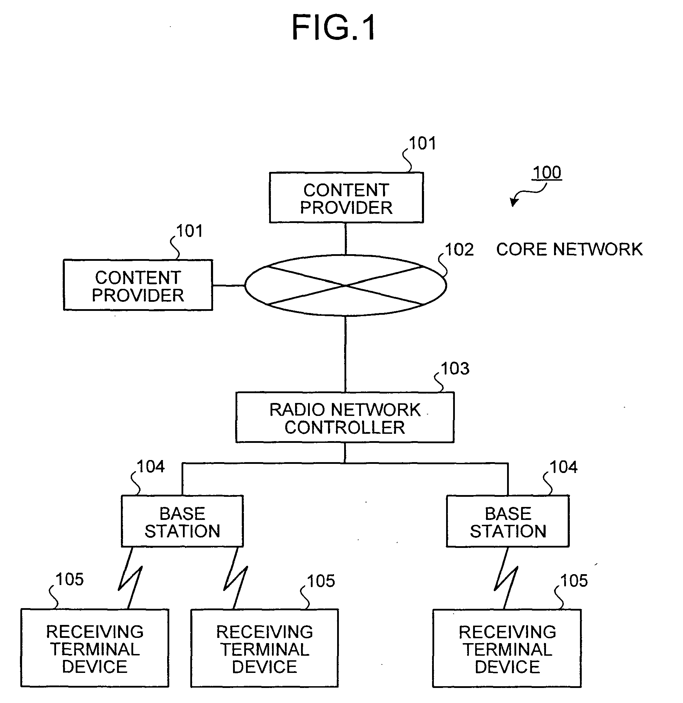

Fig. 1 is a block diagram of a content delivery system according to a first embodiment of the present invention. As shown in Fig. 1, a content delivery system 100 includes a content provider 101, a core network 102, a radio network controller 103, a base station 104, and a receiving terminal device 105.

The content provider 101 provides the radio network controller 103 with content, such as an audio file, a video file, and other data files, via the core network 102. The core network 102 is a basic trunk communication line (backbone) for connecting between common carriers. The content provider 101 and the radio network controller 103 are connected with the core network 102. The radio network controller 103 serves as a relay for transmitting the content provided from the content provider 101 via the core network 102, to each of the receiving terminal devices 105. The base station 104 is provided in every area to transmit the content relayed by the radio network controller 103, to each of the receiving terminal devices 105 through radio communication. The receiving terminal device 105 receives the content transmitted from the base station 104 with the radio communication. The receiving terminal device 105 may include, for example, a television and radio, and a mobile phone.

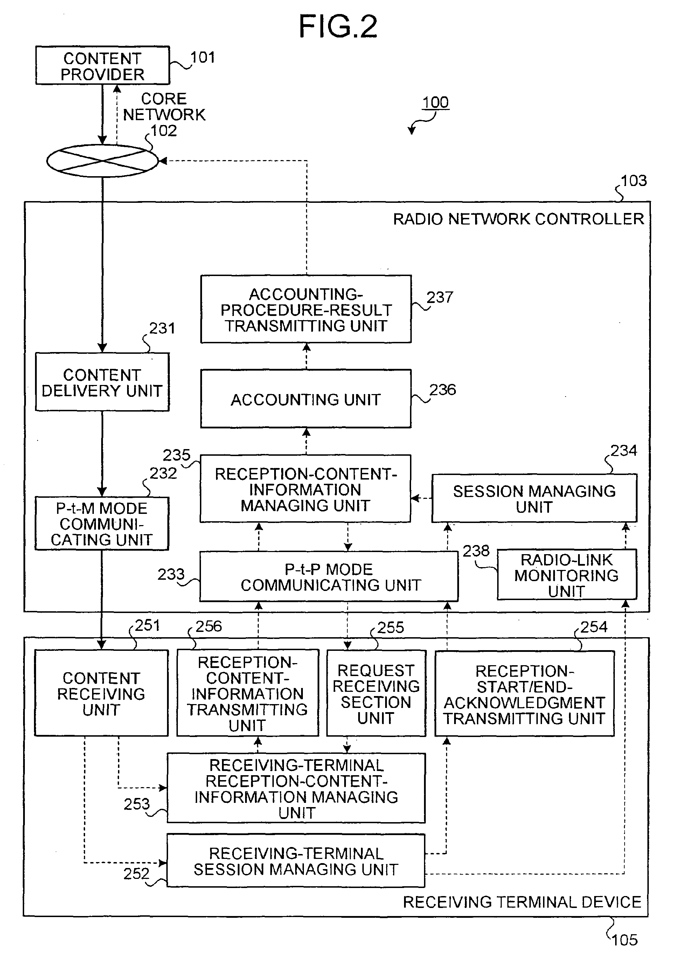

Fig. 2 is a block diagram of the content delivery system according to the first embodiment. As shown in Fig. 2, the content delivery system 100 includes the content provider 101, the core network 102, the radio network controller 103, the base station 104 (not shown), and the receiving terminal device 105. The base station 104 not shown relays the communication between the radio network controller 103 and the receiving terminal device 105. In Fig. 2, the solid line represents a flow of the content and the dotted line represents a flow of other control signals.

The radio network controller 103 includes a content delivery unit 231, a P-t-M mode communicating unit 232, a P-t-P mode communicating unit 233, a session managing unit 234, a reception-content-information managing unit 235, an accounting unit 236, an accounting-procedure-result transmitting unit 237, and a radio-link monitoring unit 238.

The content delivery unit 231 transmits the content to the receiving terminal device 105 via the P-t-M mode communicating unit 232. The P-t-M mode communicating unit 232 is an interface for communication with the receiving terminal devices 105 in the P-t-M mode. Specifically, the P-t-M mode communicating unit 232 delivers all at once the content to all of the receiving terminal devices 105 in a specific area.

The P-t-P mode communicating unit 233 is an interface for communication with the receiving terminal devices 105 in the P-t-P mode. The P-t-P mode communicating unit 233 is individually connected to each of the receiving terminal devices 105 to exchange control signals therebetween. Specifically, the P-t-P mode communicating unit 233, when receiving an acknowledgment (hereinafter, "reception start acknowledgment") that the receiving terminal device 105 starts reception of the content from the receiving terminal device 105, outputs the reception start acknowledgment to the session managing unit 234.

In addition, the P-t-P mode communicating unit 233, when receiving an acknowledgment (hereinafter, "reception end acknowledgment") that the receiving terminal device 105 completes the reception of the content from the receiving terminal device 105, outputs the received reception end acknowledgment to the session managing unit 234. Moreover, the P-t-P mode communicating unit 233, when acquiring a request for information (hereinafter, "reception content information") on the content received by the receiving terminal device 105 from the reception-content-information managing unit 235, transmits the acquired request for the reception content information to the receiving terminal device 105. Furthermore, the P-t-P mode communicating unit 233 outputs the received reception content information to the reception-content-information managing unit 235.

The P-t-P mode communicating unit 233 is individually connected to a communication destination to communicate therewith. For that reason, the radio network controller 103, when receiving data from the receiving terminal device 105 via the P-t-P mode communicating unit 233, can acquire identification (ID) of the receiving terminal device 105 that has transmitted the data. In the P-t-P mode according to a second embodiment described later, the radio network controller 103, when delivering the content to the receiving terminal device 105 via the P-t-P mode communicating unit 233, can acquire the reception content information of each of the receiving terminal devices 105.

The session managing unit 234 receives the reception start acknowledgment and the reception end acknowledgment from the receiving terminal device 105, and a radio link-down occurrence report from the radio-link monitoring unit 238, and manages a connection state between the radio network controller 103, and each of the receiving terminal devices 105. Specifically, the session managing unit 234, when receiving the reception start acknowledgment transmitted from the receiving terminal device 105, via the P-t-P mode communicating unit 233, outputs the ID of the receiving terminal device 105 that has transmitted the reception start acknowledgment, and a request that management of the reception content information to this receiving terminal device 105 should be started (hereinafter, "reception-content-information-management start request), to the reception-content-information managing unit 235.

In addition, the session managing unit 234, when receiving the reception end acknowledgment transmitted from the receiving terminal device 105, via the P-t-P mode communicating unit 233, outputs the ID of the receiving terminal device 105 that has transmitted the reception end acknowledgment, and a request that the management of the reception content information to this receiving terminal device 105 should be completed (hereinafter, "reception-content-information-management end request"), to the reception-content-information managing unit 235. Moreover, the session managing unit 234, when acquiring an ID of the receiving terminal device 105 in which a link-down has occurred, and a link-down acknowledgment about this receiving terminal device 105 from the radio-link monitoring unit 238, outputs the ID of the receiving terminal device 105 in which the link-down has occurred, and the reception-content-information-management end request to this receiving terminal device 105, to the reception-content-information managing unit 235.

The reception-content-information managing unit 235 manages an ID of each receiving terminal device 105 currently receiving the content (i.e. in the process of having the content transmitted to it, below also referred to simply as "receiving the content"), and the reception content information of each of these receiving terminal devices 105. Specifically, the reception-content-information managing unit 235 creates a list of IDs (hereinafter, "ID list") of the receiving terminal devices 105 receiving the content based on the information acquired from the session managing unit 234. In addition, the reception-content-information managing unit 235 updates the ID list as necessary.

More specifically, the reception-content-information managing unit 235, when acquiring an ID of the receiving terminal device 105 that has transmitted the reception start acknowledgment, and a reception-content-information-management start request about this receiving terminal device 105 from the session managing unit 234, adds the acquired ID to the ID list, and inquires the receiving terminal device 105 about the reception content information at a predetermined timing by sending a request for the reception content information. The request for the reception content information to the receiving terminal device 105 from the reception-content-information managing unit 235 is performed via the P-t-P mode communicating unit 233. The reception content information may be periodically requested at constant time intervals, for example, a period from addition of the ID of the receiving terminal device 105 to the ID list until deletion thereof from the ID list.

Moreover, the reception-content-information managing unit 235 stores the received reception content information in an associated manner with the ID of the receiving terminal device 105 that has transmitted the reception content information. Moreover, the reception-content-information managing unit 235, when acquiring the ID of the receiving terminal device 105 that has transmitted the reception end acknowledgment, and the reception-content-information-management end request about this receiving terminal device 105 from the session managing unit 234, outputs the ID of the receiving terminal device 105 that has transmitted the reception end acknowledgment, and the reception content information that has been stored being associated with this ID, to the accounting unit 236 to delete this ID from the ID list.

Furthermore, the reception-content-information managing unit 235, also when acquiring the ID of the receiving terminal device 105 in which the link-down has occurred, and the reception-content-information-management end request about this receiving terminal device 105 from the session managing unit 234, outputs the acquired ID, and the reception content information that has been stored being associated with this ID, to the accounting unit 236 to delete this ID from the ID list.

The accounting unit 236 monitors usage of the content delivery system by terminal devices and performs accounting procedure required for the content provider 101 to charge compensation of the content to the user of the receiving terminal device 105. In the accounting procedure, a fee is calculated by multiplying a unit fee of the content by an amount of content that the receiving terminal device 105 has received. Specifically, the accounting unit 236, when acquiring the ID of the receiving terminal device 105 in which the reception of the content is completed or the link-down has occurred, and the reception content information associated with this ID, from the reception-content-information managing unit 235, performs the accounting procedure based on the acquired reception content information, and transmits the acquired ID, and the result of the accounting procedure corresponding to the acquired ID to the content provider 101 via the accounting-procedure-result transmitting unit 237 and the core network 102.

The accounting-procedure-result transmitting unit 237, when acquiring an ID of the receiving terminal device 105 to which the accounting procedure has been performed by the accounting unit 236, and an accounting procedure result corresponding to this ID from the accounting unit 236, transmits the acquired ID, and the accounting procedure result corresponding to the acquired ID to the content provider 101 via the core network 102.

The radio-link monitoring unit 238 monitors a link state between the radio network controller 103 and the receiving terminal device 105, and when detecting that the link is down, outputs the ID of the receiving terminal device 105 in which the link-down has occurred, and the link-down acknowledgment about this receiving terminal device 105 to the session managing unit 234.

The receiving terminal device 105 includes a content receiving unit 251, a receiving-terminal session managing unit 252, a receiving-terminal reception-content-information managing unit 253, a reception-start/end-acknowledgment transmitting unit 254, a request receiving unit 255, and a reception-content-information transmitting unit 256.

The content receiving unit 251 receives the content delivered from the radio network controller 103. Additionally, the content receiving unit 251, when starting the reception of the content, outputs the reception start acknowledgment to the receiving-terminal session managing unit 252. Moreover, the content receiving unit 251, when completing the reception of the content, outputs the reception end acknowledgment to the receiving-terminal session managing unit 252.

The receiving-terminal session managing unit 252 manages a connecting state of the receiving terminal device 105 with the radio network controller 103. Specifically, the receiving-terminal session managing unit 252, when acquiring the reception start acknowledgment from the content receiving unit 251, transmits the reception start acknowledgment to the radio network controller 103 via the reception-start/end-acknowledgment transmitting unit 254. Moreover, the receiving-terminal session managing unit 252, when acquiring the reception start acknowledgment from the content receiving unit 251, transmits the reception end acknowledgment via the reception-start/end-acknowledgment transmitting unit 254 to the radio network controller 103.

The receiving-terminal reception-content-information managing unit 253 stores the reception content information regarding the content received by the content receiving unit 251 while updating it as necessary. The reception content information herein is information required for the radio network controller 103 to acquire information on what content and how much content the receiving terminal device 105 has received, and includes information on, for example, a type of content, and an amount of content received by the content receiving unit 251. Moreover, the receiving-terminal reception-content-information managing unit 253, when receiving the request for the reception content information via the request receiving unit 255 from the radio network controller 103, transmits the reception content information stored therein while updating it as necessary, to the radio network controller 103 via the reception-content-information transmitting unit 256.

The reception-start/end-acknowledgment transmitting unit 254, when acquiring the reception start acknowledgment from the receiving-terminal session managing unit 252, transmits the reception start acknowledgment to the radio network controller 103. The reception-start/end-acknowledgment transmitting unit 254, when acquiring the reception end acknowledgment from the receiving-terminal session managing unit 252, transmits the reception end acknowledgment to the radio network controller 103.

The request receiving unit 255, when receiving the request for the reception content information from the radio network controller 103, outputs the request for the reception content information to the receiving-terminal reception-content-information managing unit 253. The reception-content-information transmitting unit 256, when acquiring the reception content information from the receiving-terminal reception-content-information managing unit 253, transmits the reception content information to the radio network controller 103.

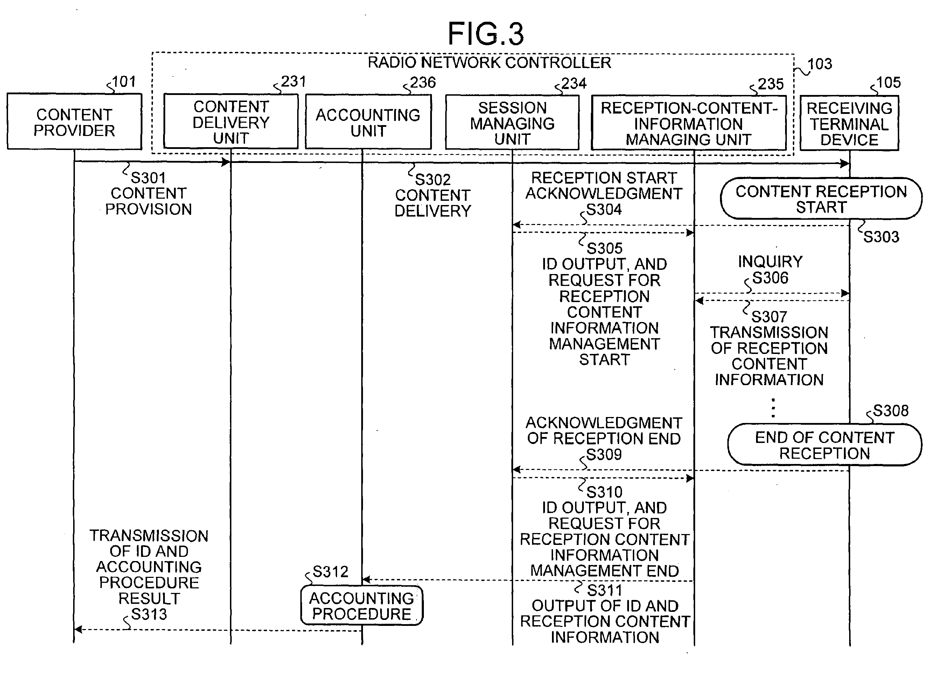

Fig. 3 is a sequence diagram of the operation by the content delivery system according to the first embodiment. In Fig. 3, the solid line represents a flow of content and the dotted line represents a flow of other control signals. As shown in Fig. 3, first, the content provider 101 provides the radio network controller 103 with the content via the core network 102 not shown (step S301). Next, the content delivery unit 231 of the radio network controller 103 delivers the content provided from the content provider 101 to each of the receiving terminal devices 105 via the P-t-M mode communicating unit 232 (step S302). Each of the receiving terminal devices 105 can receive the content delivered from the radio network controller 103 whenever necessary.

Next, by an operation of a user, the content receiving unit 251 of the receiving terminal device 105 starts reception of the content from the radio network controller 103 (step S303). The receiving-terminal session managing unit 252 transmits the reception start acknowledgment via the reception-start/end-acknowledgment transmitting unit 254 to the radio network controller 103 (step S304).

Then, the session managing unit 234 of the radio network controller 103 outputs the ID of the receiving terminal device 105 that has transmitted the reception start acknowledgment, and the reception-content-information-management start request regarding the ID of this receiving terminal device 105, to the reception-content-information managing unit 235 (step S305). Subsequently, the reception-content-information managing unit 235 of the radio network controller 103 inquires the receiving terminal device 105 about the reception content information at a predetermined timing (step S306).

Next, the receiving-terminal reception-content-information managing unit 253 of the receiving terminal device 105, in response to the request for the reception content information, transmits the reception content information acquired from the content receiving unit 251 to the radio network controller 103 via the reception-content-information transmitting unit 256 (step S307). The reception-content-information managing unit 235 may inquire the receiving terminal device 105 about the reception content information (step S306) more than one time, and the receiving terminal device 105, whenever the request for the reception content information is generated, transmits the reception content information to the reception-content-information managing unit 235 (step S307).

Next, by an operation of the user, the content receiving unit 251 completes the reception of the content transmitted from the radio network controller 103 (step S308). The receiving-terminal session managing unit 252 of the receiving terminal device 105 transmits the reception end acknowledgment to the radio network controller 103 via the reception-start/end-acknowledgment transmitting unit 254 (step S309).

Then, the session managing unit 234 of the radio network controller 103 outputs the ID of the receiving terminal device 105 that has transmitted the reception end acknowledgment, and the reception-content-information-management end request about this receiving terminal device 105, to the reception-content-information managing unit 235 (step S310). Subsequently, the reception-content-information managing unit 235 outputs the ID and the reception content information associated with the ID to the accounting unit 236 (step 5311).

The accounting unit 236 performs the accounting procedure based on the reception content information (step S312). The accounting unit 236 transmits the ID of the receiving terminal device 105 for which the accounting procedure has been performed, and the accounting procedure result corresponding to this ID to the content provider 101 via the accounting-procedure-result transmitting unit 237 and the core network 102 (step S313). Thus, a series of procedures are completed.

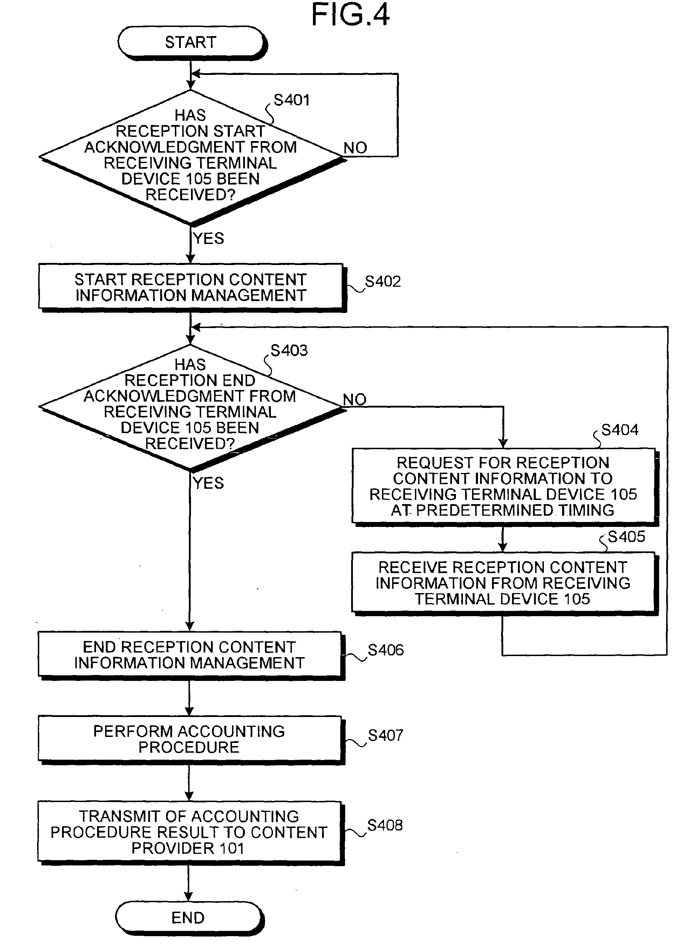

Fig. 4 is a flowchart of the operation by the radio network controller of the content delivery system according to the first embodiment. The content delivery unit 231 of the radio network controller 103 delivers the content provided from the content provider 101 via the P-t-M mode communicating unit 232, and each of the receiving terminal devices 105 can receive the content delivered by the radio network controller 103 whenever necessary. First, the session managing unit 234 determines whether the reception start acknowledgment of the receiving terminal device 105 is received (step S401), and waits for the reception if it is not received (step S401: NO).

At step S401, if the reception start acknowledgment is received from the receiving terminal device 105 (step S401: YES), the reception-content-information managing unit 235 starts the management of the reception content information (step S402). Specifically, the reception-content-information managing unit 235, if the reception start acknowledgment is received, adds the ID of the receiving terminal device 105 that has transmitted the reception start acknowledgment to the ID list. Then, the session managing unit 234 determines whether the reception end acknowledgment from the receiving terminal device 105 is received by itself (step S403).

At step S403, if the reception end acknowledgment from the receiving terminal device 105 is not received (step S403: NO), the reception-content-information managing unit 235 inquires the receiving terminal device 105 about the reception content information via the P-t-P mode communicating unit 233 at a predetermined timing (step S404). Next, the reception-content-information managing unit 235 receives the reception content information from the receiving terminal device 105 (step S405), and stores this reception content information in association with the ID of this receiving terminal device 105. The process then returns to step S403 again and the procedure will be continued.

At step S403, if the reception end acknowledgment is received (step S403: YES), the reception-content-information managing unit 235 completes the management of the reception content information (step S406). Specifically, if the session managing unit 234 receives the reception end acknowledgment from the receiving terminal device 105, the ID of the receiving terminal device 105 that has transmitted the reception end acknowledgment, and the reception content information that has been stored in association with this ID are output to the accounting unit 236. The ID is then deleted from the ID list.

Next, the accounting unit 236 performs the accounting procedure based on the acquired ID and reception content information (step S407). Lastly, the accounting unit 236 transmits the accounting procedure result to the content provider 101 (step S408), and a series of procedures will be completed. Specifically, the accounting unit 236 transmits the ID of the receiving terminal device 105 for which the accounting procedure has been performed, and the accounting procedure result corresponding to the ID, to the content provider 101 via the accounting-procedure-result transmitting unit 237 and the core network 102.

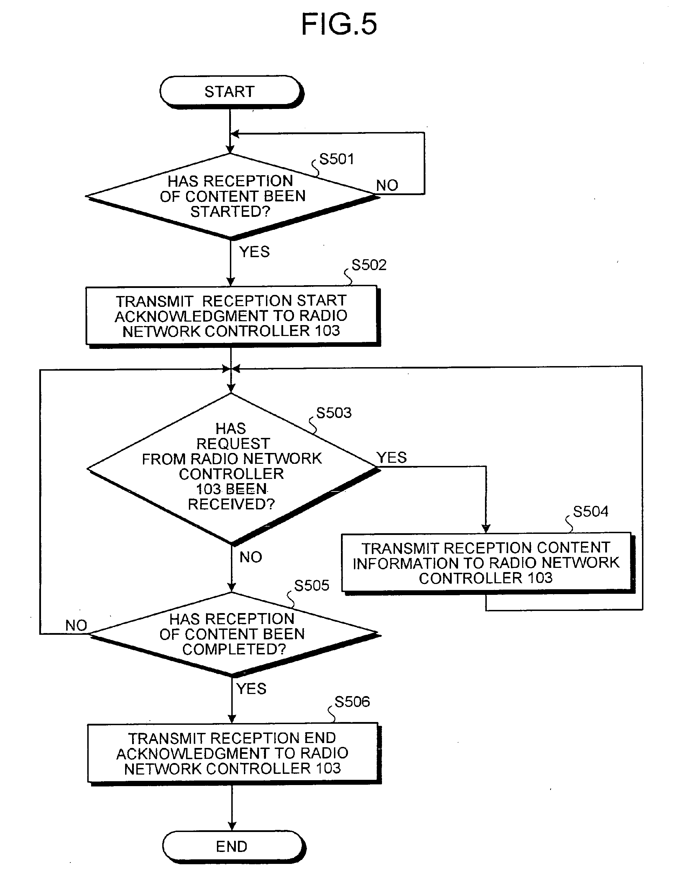

Fig. 5 is a flowchart of the operation by the receiving terminal device of the content delivery system according to the first embodiment. The content delivery unit 231 of the radio network controller 103 delivers the content provided from the content provider 101 via the P-t-M mode communicating unit 232, and each of the receiving terminal devices 105 can receive the content whenever necessary. First, it is determined whether the content receiving unit 251 starts the reception of the content by a user's operation (step S501), and if the reception of the content is not started, the start will be waited for (step S501: NO).

At step S501, if the content receiving unit 251 starts the reception of the content (step S501: YES), the receiving-terminal session managing unit 252 transmits the reception start acknowledgment via the reception-start/end-acknowledgment transmitting unit 254 to the radio network controller 103 (step S502). Next, the receiving-terminal reception-content-information managing unit 253 determines whether the request for the reception content information has been received via the request receiving unit 255 from the radio network controller 103 (step S503).

At step S503, if the request for the reception content information is received (step S503: YES), the receiving-terminal reception-content-information managing unit 253 transmits the reception content information via the reception-content-information transmitting unit 256 to the radio network controller 103 (step S504). The receiving terminal device 105 then returns to step S503, and continues the procedure. At step S503, if the request for the reception content information is not received (step S503: NO), it is determined whether the content receiving unit 251 has completed the reception of the content by an operation of a user (step S505). If the content receiving unit 251 has not completed the reception of the content (step S505: NO), the process returns to step S503 and the procedure will be continued.

At step S505, if the content receiving unit 251 has completed the reception of the content (step S505: YES), the receiving-terminal session managing unit 252 transmits the reception end acknowledgment to the radio network controller 103 through the reception-start/end-acknowledgment transmitting unit 254 (step S506). Thus, a series of procedures is completed.

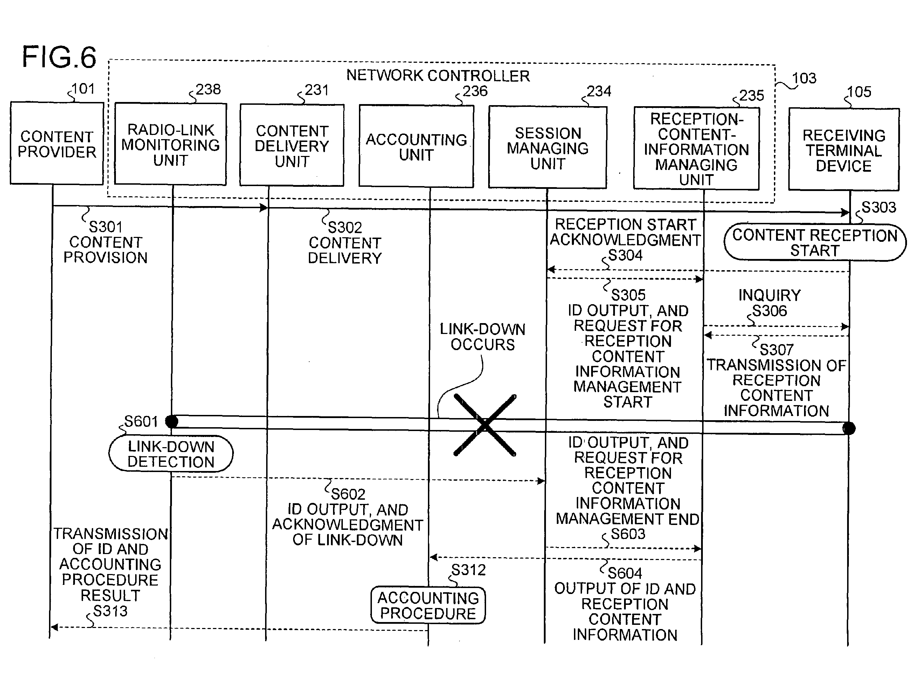

Fig. 6 is a sequence diagram of the operation by the content delivery system according to the first embodiment when a communication failure (link-down) is detected. In Fig. 6, the solid line represents a content flow and the dotted line represents a flow of other control signals. Moreover, the same reference numeral is given to parts having the same function as that shown in Fig. 3, and description thereof will be omitted. As shown in Fig. 6, if a link-down occurs between the radio network controller 103 and the receiving terminal device 105 while the receiving terminal device 105 is receiving the content, the radio-link monitoring unit 238 of the radio network controller 103 detects this link-down (step S601).

The radio-link monitoring unit 238 outputs the ID of the receiving terminal device 105 in which the link-down has occurred, and the link-down acknowledgment about this receiving terminal device 105 to the session managing unit 234 (step S602). Subsequently, the session managing unit 234 outputs the ID of the receiving terminal device 105 in which the link-down has occurred, and the reception-content-information-management end request about this receiving terminal device 105, to the reception-content-information managing unit 235 (step S603).

The reception-content-information managing unit 235 of the radio network controller 103 outputs the ID of the receiving terminal device 105 in which the link-down has occurred, and the reception content information which is stored while being associated with this ID, to the accounting unit 236 (step S604). Procedures similar to those of the accounting procedure (step S312) and the transmission of the accounting procedure result (step S313) shown in Fig. 3 are performed (see Fig. 3). Thus, a series of procedures will be completed.

According to the content delivery system 100 in accordance with the first embodiment of the present invention described above, even in the content delivery in the P-t-M mode, the content provider 101 can acquire the information on what content and how much content the receiving terminal device 105 has received. As a result, it becomes possible to appropriately monitor usage of the service and charge the user according to use of the content. In addition, it is possible to detect the link-down between the radio network controller 103 and the receiving terminal device 105. Therefore, it is possible to avoid charging for the content that has not actually been received by the receiving terminal device 105.

Incidentally, in the description of the first embodiment when the link-down has occurred, while the reception-content-information-management end request is output from the session managing unit 234 to the reception-content-information managing unit 235, in addition to this, information that completion of the content reception is caused by the occurrence of link-down may be output. In this case, the reception-content-information managing unit 235, when outputting the reception content information to the accounting unit 236, also outputs the information that the completion of the content reception is caused by the link-down, to the accounting unit 236 together. Thus, the accounting unit performs the accounting procedure while distinguishing between a case where the reception is ended by a user and a case where the reception is ended due to the link-down.

Moreover, in the description of the first embodiment, the radio-link monitoring unit 238 detects the link-down, but when the reception-content-information managing unit 235 inquires the receiving terminal device 105 about the reception content information, if the reception content information is not acquired from the receiving terminal device 105 within a predetermined time, it may be determined that the link-down has occurred. In addition, in this case, similar to the case where the radio-link monitoring unit 238 detects the link-down, the reception-content-information managing unit 235 completes the management of the reception content information, and the process proceeds to the subsequent accounting procedure. Thus, the radio-link monitoring unit 238 of the radio network controller 103 can be omitted.

In a second embodiment of the present invention, a content delivery system is provided with a function, in addition to the configuration of the content delivery system 100 described in the first embodiment, for switching the communication mode of the content delivery to the receiving terminal device 105 depending on the number of the receiving terminal devices 105 which are currently receiving the content. Specifically, the content delivery system in accordance with the second embodiment performs the content delivery in the P-t-M mode, when the number of the receiving terminal devices 105 receiving the content is not less than a threshold. Meanwhile, the content delivery system according to the second embodiment performs the content delivery in the P-t-P mode, when the number of the receiving terminal devices 105receiving the content is less than the threshold.

Incidentally, in the description of the content delivery system in accordance with the second embodiment, only a configuration different from that of the content delivery system 100 in accordance with the first embodiment will be described, and the same reference numeral is given to a part similar to that of the content delivery system 100, and the description thereof will be omitted. Additionally, for the convenience of the description, it is assumed the content delivery system according to the second embodiment usually performs the content delivery in the P-t-M mode, and only when the number of the receiving terminal devices 105receiving the content becomes less than a threshold, performs the content delivery in the P-t-P mode.

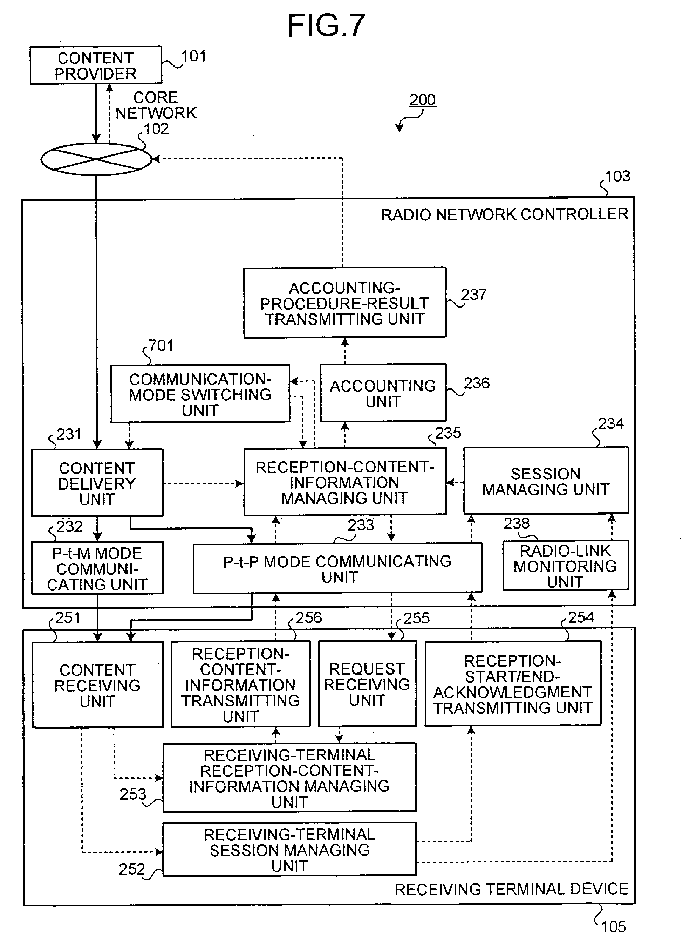

Fig. 7 is a block diagram of the content delivery system according to the second embodiment. As shown in Fig. 7, a content delivery system 200 includes a communication-mode switching unit 701 in addition to the configuration of the content delivery system 100. In Fig. 7, the solid line represents a content flow and the dotted line represents a flow of other control signals.

The reception-content-information managing unit 235 has a function for outputting an ID list of the receiving terminal device 105 receiving the content to the communication-mode switching unit 701 in addition to the function described in the first embodiment. Specifically, the reception-content-information managing unit 235, when the receiving terminal device 105 starts and completes the reception, or the number of IDs of the receiving terminal devices 105 receiving the content is changed due to the link-down and when the ID list is thereby updated, outputs the updated ID list to the communication-mode switching unit 701. In addition, the reception-content-information managing unit 235, when acquiring, from the content delivery unit 231, the ID of the receiving terminal device 105 receiving the content, and the reception content information associated with this ID, stores the acquired ID and the reception content information associated with this ID.

Moreover, the reception-content-information managing unit 235, when acquiring an acknowledgment of delivery of the content in the P-t-P mode from the communication-mode switching unit 701, stops requesting for the reception content information to the receiving terminal device 105 . When the acknowledgment of delivery in the P-t-M mode is acquired from the communication-mode switching unit 701, the request for the reception content information to the receiving terminal device 105 is resumed.

The communication-mode switching unit 701 switches communication modes between the P-t-M mode and the P-t-P mode. Specifically, when the ID list is acquired from the reception-content-information managing unit 235, it is determined whether the number of the receiving terminal devices 105 receiving the content is not less than the threshold based on the acquired ID list. When the number of the receiving terminal devices 105 currently receiving the content is not less than the threshold, the communication-mode switching unit 701 requests the content delivery unit 231 to deliver the content in the P-t-M mode. The communication-mode switching unit 701 outputs an acknowledgment of delivery of the content in the P-t-M mode to the reception-content-information managing unit 235. Meanwhile, when the number of the receiving terminal devices 105receiving the content is less than the threshold, the communication-mode switching unit 701 requests the content delivery unit 231 to deliver the content in the P-t-P mode. The communication-mode switching unit 701 outputs the list of ID to the content delivery unit 231. In addition, the communication-mode switching unit 701 outputs an acknowledgment of delivery of the content in the P-t-P mode to the reception-content-information managing unit 235.

When requested to deliver the content in the P-t-M mode, the content delivery unit 231 delivers the content to the receiving terminal device 105 via the P-t-M mode communicating unit 232. On the other hand, when the content delivery unit 231 is requested to deliver the content in the P-t-P mode from the communication-mode switching unit 701, and acquires the ID list of the receiving terminal devices 105 currentlyreceiving the content, the content delivery unit 231 delivers the content to the receiving terminal device 105 on the ID list via the P-t-P mode communicating unit 233. When the content is delivered in the P-t-P mode, the content delivery unit 231 can acquire the reception content information. The content delivery unit 231 outputs the ID of the receiving terminal device 105 receiving the content, and the reception content information corresponding to this ID to the reception-content-information managing unit 235 at predetermined timing.

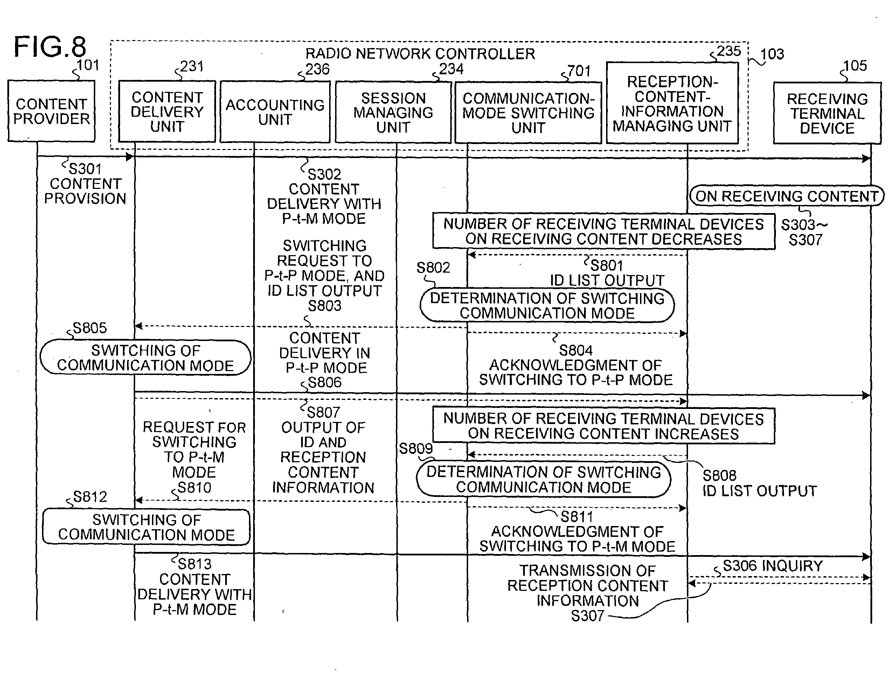

Fig. 8 is a sequence diagram of the communication mode switching operation by the content delivery system according to the second embodiment. In Fig. 8, the solid line represents a flow of content and the dotted line represents a flow of other control signals. Moreover, in the description of the second embodiment, a case where the P-t-M mode is first used for the content delivery to the receiving terminal device 105, and is subsequently changed to the P-t-P system and the P-t-M mode is assumed. The same reference numeral is given to an operation similar to that of the content delivery system 100 described in the first embodiment and the description thereof will be omitted (see Fig. 3). As shown in Fig. 8, first, the content provided from the content provider 101 is delivered to each of the receiving terminal devices 105 via the P-t-M mode communicating unit 232 of the radio network controller 103 (refer to step S301 in Fig. 3).

Next, the content is delivered from the radio network controller 103 in the P-t-M mode to the receiving terminal device 105 (step S302 in Fig. 3), and the receiving terminal device 105 is receiving the content under delivery (steps S303 to S307 in Fig. 3). Then, if the number of the receiving terminal devices 105 in the process ofreceiving the content changes (for example, is reduced), the reception-content-information managing unit 235 outputs the ID list of the receiving terminal device 105 receiving the content to the communication-mode switching unit 701 (step S801). Specifically, when the reception-content-information managing unit 235 acquires the ID of the receiving terminal device 105 in which the reception of the content is completed or the link-down has occurred, and the request of reception content information management end to this receiving terminal device 105 are received from the session managing unit 234, the reception-content-information managing unit 235 deletes this ID from the ID list and outputs the ID list from which this ID has been deleted, to the communication-mode switching unit 701.

When the communication-mode switching unit 701 acquires the ID list from the reception-content-information managing unit 235, the communication-mode switching unit 701 determines the switching of communication mode for delivering the content (step S802). Specifically, the communication-mode switching unit 701 determines whether the number of the receiving terminal devices 105receiving the content is not less than the threshold. In this example, the number of the receiving terminal devices 105receiving the content is assumed to be less than the threshold. Subsequently, the communication-mode switching unit 701 requests the content delivery unit 231 to switch the communication mode for delivering the content to the P-t-P mode, and outputs the ID list acquired from the reception-content-information managing unit 235, to the content delivery unit 231 (step S803). Moreover, the communication-mode switching unit 701 notifies the reception-content-information managing unit 235 to switch the communication mode for delivering the content to the P-t-P system (step 5804).

Then, the content delivery unit 231 switches the communication mode for delivering the content to the P-t-P mode (step S805). Specifically, the content delivery unit 231 stops the content delivery via the P-t-M mode communicating unit 232 to prepare the content delivery to the receiving terminal device 105 via the P-t-P mode communicating unit 233. Thus, the content delivery unit 231 delivers the content in the P-t-P mode (step S806).

The content delivery unit 231 outputs the ID of each receiving terminal device 105 which isreceiving the content, and the reception content information corresponding to this ID to the reception-content-information managing unit 235 (step S807). The operation at step S807 will be performed at predetermined intervals, until the communication mode is switched to the P-t-M mode again, the receiving terminal device 105 completes the reception of the content, or the link-down between the radio network controller 103 and the receiving terminal device 105 occurs. If the number of the receiving terminal devices 105receiving the content changes (for example, increases), the reception-content-information managing unit 235 outputs the ID list of the receiving terminal device 105 receiving the content to the communication-mode switching unit 701 (step S808). Specifically, when the reception-content-information managing unit 235 acquires the ID of the receiving terminal device 105 that has transmitted the reception start acknowledgment, and the reception-content-information-management start request for this receiving terminal device 105 from the session managing unit 234, the reception-content-information managing unit 235 adds this ID to the ID list, and outputs the ID list to which this ID has been added to the communication-mode switching unit 701.

Then, the communication-mode switching unit 701, when the ID list of the receiving terminal device 105receiving the content is output from the reception-content-information managing unit 235, determines the switching of communication mode for delivering the content (step 5809). Specifically, the communication-mode switching unit 701 determines whether the number of the receiving terminal devices 105 receiving the content is not less than the threshold. In this example, the number of the receiving terminal devices 105 receiving the content is assumed to be not less than the threshold. Subsequently, the communication-mode switching unit 701 requests the content delivery unit 231 to switch the communication mode for delivering the content to the P-t-M mode (step S810) . Moreover, the communication-mode switching unit 701 notifies the reception-content-information managing unit 235 that the communication mode is switched to the P-t-M mode (step S811).

Next, the content delivery unit 231 switches the communication mode for delivering the content to the P-t-M mode (step S812). Specifically, the content delivery unit 231 stops the content delivery to the receiving terminal device 105 via the P-t-P mode communicating unit 233 to prepare the content delivery via the P-t-M mode communicating unit 232. Thus, the content delivery unit 231 delivers the content in the P-t-M mode (step S813).

Procedures similar to steps S306 to S313 shown in Fig. 3 are performed in a period in which the reception-content-information managing unit 235 starts requesting the receiving terminal device 105 for the reception content information again, the receiving terminal device 105 completes the reception of the content, and the accounting unit 236 transmits the accounting procedure result to the content provider 101 (see Fig. 3). Thus, a series of procedures will be completed.

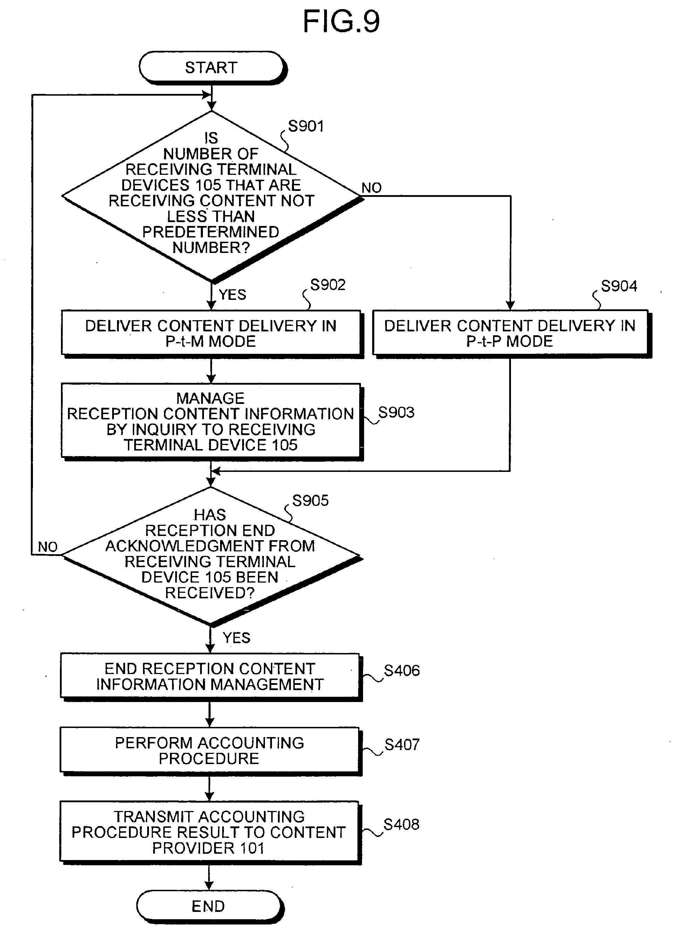

Fig. 9 is a flowchart of the operation by the radio network controller in the content delivery system according to the second embodiment. The operation where the radio network controller 103 delivers the content in the P-t-M mode is the same as operation shown in Fig. 4, therefore, only the operation of switching the communication mode will be herein described. Additionally, the content provided from the content provider 101 is delivered through the P-t-M mode communicating unit 232 of the radio network controller 103 at first, and each of the receiving terminal devices 105 can receive the content delivered from the radio network controller 103 whenever necessary.

First, if the number of the receiving terminal devices 105 receiving the content changes, the communication-mode switching unit 701 determines whether the number of the receiving terminal devices 105 receiving the content is not less than the threshold (step S901). Specifically, when the session managing unit 234 receives the reception start acknowledgment or the reception end acknowledgment from the receiving terminal device 105, or acquires the link-down acknowledgment from the radio-link monitoring unit 238, the reception-content-information managing unit 235 updates the ID list of the receiving terminal device 105 receiving the content, and outputs the updated ID list to the communication-mode switching unit 701. The communication-mode switching unit 701 determines whether the number of IDs in the acquired ID list is not less than the threshold.

At step S901, if the number of the receiving terminal devices 105 receiving the content is not less than the threshold (step S901: YES), the communication mode for delivering the content to the receiving terminal device 105 is the P-t-M mode (step S902). Specifically, when the content is delivered in the P-t-M mode at the time of the determination (step S901), the content delivery unit 231 does not switch the system for delivering the content, and then, delivers the content via the P-t-M mode communicating unit 232. On the other hand, when the content is delivered in the P-t-P mode, the content delivery unit 231 switches the communication mode to the P-t-M mode, and delivers the content via the P-t-M mode communicating unit 232. When the content is delivered in the P-t-M mode, by sending the request to the receiving terminal device 105, the reception content information is managed (step S903). Details have already been described in the first embodiment (refer to Fig. 4).

At step S901, if the number of the receiving terminal devices 105 receiving the content is less than the threshold (step S901: NO), the communication mode for delivering the content to the receiving terminal device 105 is the P-t-P mode (step S904). Specifically, when the content is delivered in the P-t-P mode at the time of determination (step S901), the content delivery unit 231 does not switch the system for delivering the content, and delivers the content via the P-t-P mode communicating unit 233. On the other hand, when the content is delivered in the P-t-M mode, the content delivery unit 231 switches the communication mode to the P-t-P mode, and delivers the content via the P-t-P mode communicating unit 233.

When the procedures at step S903 or step S904 are completed, the session managing unit 234 determines whether the reception end acknowledgment from the receiving terminal device 105 is received (step S905). If the reception end acknowledgment from the receiving terminal device 105 is not received (step S905: NO), the procedure returns to step S901 again and the procedure will be continued. If the reception end acknowledgment is received (step S905: YES), the reception-content-information managing unit 235 completes the management of the reception content information (step S406 in Fig. 4). Then, procedures similar to steps S406 to S408 shown in Fig. 4 are performed in a period from the management of the reception content information is completed until the accounting procedure result is transmitted to the content provider 101 (see Fig. 4). Thus, a series of procedures will be completed.

According to the content delivery system 200, effective use of communication resources can be achieved. Furthermore, even if the content is delivered in the P-t-M mode, the content provider 101 can acquire the information on what content and how much content the receiving terminal device 105 has received.

While in the second embodiment, the operation when the link-down is detected is not described, similar operation as the operation in the first embodiment is performed.

While in the second embodiment, the reception-content-information managing unit 235 outputs the ID list to the communication-mode switching unit 701 whenever the number of the terminal devices 105 receiving the content changes, only information on the ID that has been added to or deleted from the ID list may be output instead of the ID list. Thus, information processing can be further achieved.

Moreover, while in the embodiments described above, the reception-content-information managing unit 235 requests the receiving terminal device 105 for the reception content information periodically at constant time intervals during the period from the addition to the subsequent deletion of the ID of the receiving terminal device 105 to and from the ID list by the reception-content-information managing unit 235, the request may be sent at arbitrary timing by the radio network controller 103. For example, the request may be made collectively to the receiving terminal device 105 soon after the session managing unit 234 receives the reception end acknowledgment.

Furthermore, while in the embodiments described above, the reception content information is transmitted in response to the request from the radio network controller 103, the reception content information may be transmitted at predetermined timings (intervals). In this case, the reception start acknowledgment from the receiving terminal device 105 to the radio network controller 103 can also be omitted.

Moreover, while in the embodiments described above, the radio network controller 103 acquires the information on the content received by the receiving terminal device 105 to perform the accounting procedure and transmits the accounting procedure result to the content provider 101, the radio network controller 103 may transmit only the reception content information to the content provider 101 without performing the accounting procedure. In this case, the accounting unit 236 can be omitted.

Furthermore, while in the embodiments described above, the radio network controller 103 requests the reception content information at arbitrary timing, the radio network controller 103 may request the reception content information also at the time of starting the content reception, thereby confirming that the management of the reception content information is to be started. As a result, an initialization setting in the radio network controller 103 and the receiving terminal device 105 can be surely made.

Moreover, while in the embodiments described above, the reception-content-information managing unit 235 collectively outputs the reception content information to the accounting unit 236 when the receiving terminal device 105 has completed the content reception, the reception-content-information managing unit 235 may output the reception content information to the accounting unit 236 whenever the reception content information is acquired from the receiving terminal device 105 or the content delivery unit 231. Thus, the reception content information can be processed in temporally distributed manner, thereby stabilizing the operation of the radio network controller 103.

As described above, with the network controller, the receiving terminal device, the content delivery system, the network control method, and content receiving method according to the present invention, even when the content is delivered from the network side to each of the receiving terminal devices in the P-t-M mode, the network side can grasp the content receiving state of each of the receiving terminal devices.

The network control method and the content receiving method described can be realized by executing a program prepared in advance on a computer, such as a personal computer, and a workstation. The program is recorded on a computer-readable recording medium, such as a hard disk, a flexible disk, a compact-disc read-only memory (CD-ROM), a magneto optical (MO) disk, and a digital versatile disk (DVD), and is executed by being read from the recording medium by the computer. This program may also be in the form of a transmission signal that is distributed via a network such as the Internet.

According to the present invention, it is possible to grasp, at a network side, a content reception state of a receiving terminal even when the content is delivered in the P-t-M mode.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A network controller for delivering data to a plurality of terminal devices at the same time, comprising:
a delivery unit configured to deliver the data in a point to multipoint mode to the terminal devices; and
a receiving unit configured to receive reception information indicating an amount of data that has been received by the terminal device, the reception information transmitted from the terminal device in a point to point mode.

2. The network controller according to claim 1, further comprising a requesting unit configured to request the terminal device for the reception information, wherein
the terminal device is configured to transmit the reception information in response to a request made by the requesting unit.

3. The network controller according to claim 1 or 2, further comprising a detecting unit configured to detect a link-down between the network controller and the terminal device, wherein
the receiving unit is configured to further receive information on detected link-down.

4. The network controller according to claim 1, 2, or 3, further comprising an accounting unit configured to perform an accounting process for each of the terminal devices based on the reception information.

5. The network controller according to claim 1, 2, 3, or 4, wherein the delivery unit is configured to switch a communication mode in which the delivery unit delivers the data, between the point to multipoint mode and the point to point mode.

6. The network controller according to claim 5, further comprising a switching unit configured to switch the communication mode according to number of terminal devices receiving the data in the point to point mode.

7. A terminal device, comprising:
a receiving unit configured to receive data from a network controller in a point to multipoint mode; and
a transmitting unit configured to transmit information indicating an amount of data that has been received by the receiving unit, to the network controller in a point to point mode.

8. The terminal device according to claim 7, wherein the transmitting unit is configured to transmit the information in response to a request from the network controller.

9. A data delivery system for delivering data to a plurality of terminal devices at the same time, comprising:
a network controller configured to deliver the data to the terminal devices in a point to multipoint mode, and to receive, from the terminal devices in a point to point mode, information indicating an amount of data that has been received by each of the receiving terminal devices; and
a receiving unit configured to receive the data in the point to multipoint mode, and to transmit, to the network controller in the point to point mode, the information indicating the amount of data received.

10. A network control method of delivering data to a plurality of terminal devices at the same time, comprising:
delivering data to the terminal devices in a point to multipoint mode; and
receiving, from the terminal devices in a point to point mode, information indicating an amount of data that has been received by each of the receiving terminal devices.

11. A data receiving method comprising the steps of:
receiving data delivered from a network controller in a point to multipoint mode; and
transmitting information indicating an amount of data that has been received in the receiving step, to the network controller in a point to point mode.
